# EUROPÄISCHE PATENTSCHRIFT

(11) **EP 1 228 312 B1**
(45) Veröffentlichungstag und Bekanntmachung des Hinweises auf die Patenterteilung: **10.09.2003**
(21) Anmeldenummer: 00983090.2
(22) Anmeldetag: 25.10.2000
(51) Int. Cl.: F04B 1/04, F04B 17/03, H02K 7/14

(54) **MOTOR-PUMPEN-AGGREGAT**
MOTOR-PUMP AGGREGATE
GROUPE MOTOPOMPE

(30) Priorität: 25.10.1999 DE 19951446
(43) Veröffentlichungstag der Anmeldung: 07.08.2002
(60) Teilanmeldung: 03016185.5
(73) Patentinhaber: Continental Teves AG & Co. oHG, 60488 Frankfurt (DE)
(72) Erfinder: DINKEL, Dieter, 65824 Schwalbach (DE); BRIESEWITZ, Rüdiger, 60385 Frankfurt (DE); REINARTZ, Hans-Dieter, 60439 Frankfurt/M. (DE); VOLZ, Peter, 64291 Darmstadt (DE)
(86) Internationale Anmeldenummer: EP0010498
(87) Internationale Veröffentlichungsnummer: WO01031198

(56) Entgegenhaltungen:
- DE-A- 19 653 638
- DE-A- 19 806 077
- DE-A- 19 840 048
- US-A- 2 547 645

## Beschreibung

Die Erfindung betrifft ein Motor-Pumpen-Aggregat nach dem Oberbegriff des Patentanspruchs 1.

Aus der deutschen Offenlegungsschrift DE 196 32 167 A1 ist ein gattungsgemäßes Motor-Pumpen-Aggregat bekannt, das insbesondere für elektronisch geregelte Bremssysteme von Kraftfahrzeugen geeignet ist und einen Elektromotor mit einer Halteplatte, z.B. für Kontaktbürsten, und eine Kolbenpumpe umfaßt, wobei Kolben der Pumpe über einen Exzenter antreibbar sind. Die Kolben werden gemäß dieser Druckschrift jeweils mittels einer Rückstellfeder gegen den Exzenter gedrückt und folgen so dessen Bewegungen.

Es ist jedoch allgemein bekannt, daß anstatt der Rückstellfedern auch ein Kuppelring verwendet werden kann, der mit den Kolben verbunden ist. Bei beispielsweise zwei gegenüberliegenden Kolben führt dann ein Kolben aufgrund des Exzenters eine Druckhubbewegung aus während der andere Kolben durch den Kuppelring zurückgezogen eine Saughubbewegung ausführt. Der Kuppelring rotiert also nicht mit dem Exzenter, sondern oszilliert. Gerade beim Anlauf der Pumpe kann es zu einem Verdrehen des Kuppelringes kommen, wobei dieser an feststehende oder rotierende Teilen des Motor-Pumpen-Aggregates stößt, wodurch insbesondere bei der Berührung mit rotierenden Teilen unerwünschte Geräusche und Reibung verursacht werden. Der dabei entstehende Abrieb kann außerdem die Funktionsfähigkeit des Motor-Pumpen-Aggregates beeinträchtigen.

In der internationalen Patentanmeldung mit der Veröffentlichungsnummer WO 00/13951, die erst nach dem Prioritätstag der vorliegenden Patentanmeldung veröffentlicht worden ist, ist deshalb auf der dem Motor gegenüberliegenden Seite des Kuppelringes ein gehäusefester Anschlag vorgesehen. Auf der anderen, dem Motor zugewandten Seite kann der Kuppelring im 8e-trieb gegen eine mit der Motorwelle bzw. dem Exzenter rotierende Ausgleichsmasse oder andere rotierende Teile stoßen, so daß an dieser Stelle eine erhöhte Reibung und ein unerwünschtes Laufgeräusch entstehen.

Aus der EP 666 418 A1 geht eine Hubkolbenpumpe mit einem besonders gestalteten Kuppelring hervor. Der Kuppelring verfügt über einen angeformten Fortsatz, dem weiterhin eine separate Anschlagscheibe zugeordnet ist. Dadurch wird ein Bewegungsbereich des Kuppelrings begrenzt.

Es ist deshalb Aufgabe der vorliegenden Erfindung, ein Motor-Pumpen-Aggregat der eingangs genannten Art so weiterzubilden, daß mit einfachen Mitteln eine Reduzierung des Laufgeräusches und der Reibung erreicht werden.

Diese Aufgabe wird erfindungsgemäß dadurch gelöst, daß bei einem gattungsgemäßen Motor-Pumpen-Aggregat zusätzlich an der Halteplatte des Motors ein Vorsprung vorgesehen ist, der sich bis in den Bewegungsbereich des Kuppelringes erstreckt. Hierdurch wird erfindungsgemäß ein feststehender Anschlag für den Kuppeiring geschaffen und so die Reibung und auftretende Laufgeräusche reduziert. Dadurch, daß ein vorhandenes Bauteil verändert wird, können außerdem Herstellungskosten, beispielsweise für einen separaten Anschlag, sowie Montagekosten und -zeit gespart werden.

Das Ende des Vorsprunges selbst kann dabei als Anschlag dienen, wenn das Material eine entsprechende Abriebfestigkeit aufweist. Alternativ dazu kann am Vorsprung jedoch auch ein separater Anschlag bzw. Anlauf für den Kuppelring aus entsprechendem Material, beispielsweise Blech, vorgesehen sein.

Der Vorsprung ist vorzugsweise kreisringförmig ausgebildet und um die in das Pumpengehäuse hineinragende Welle des Motors herum angeordnet. Alternativ dazu kann der Vorsprung auch einzelne Abschnitte aufweisen, die bis in den Bewegungsbereich des Kuppelringes ragen.

Bei Motor-Pumpen-Aggregaten besteht ferner stets die Anforderung, daß der Motorinnenraum frei von Fremdpartikeln sein muß. Derartige Verunreinigungen könnten die empfindliche Elektronik des Motors beeinflussen bzw. schädigen, wodurch das ganze Aggregat ausfallen kann. Die Verunreinigungen können einerseits feste Medien wie Staub oder Abrieb sein, andererseits auch flüssige Medien wie Hydraulikflüssigkeit, insbesondere auch Bremsflüssigkeit, der Pumpe sowie von außen in das Aggregat eindringendes Wasser oder Salzwasser. Zur wirksamen Trennung von Pumpe und Motor ist deshalb mit besonderem Vorteil zwischen dem Vorsprung und der Welle eine Schottwand vorgesehen, die das Eindringen von Fremdmedien in den Motorinnenraum verhindert bzw, erschwert.

Mit Vorteil kann dabei die Schottwand einstückig mit der Halteplatte ausgebildet sein. Es ist aber auch möglich, daß die Schottwand als eigenständiges Bauteil beispielsweise einstükkig mit dem separaten Anschlag ausgebildet ist.

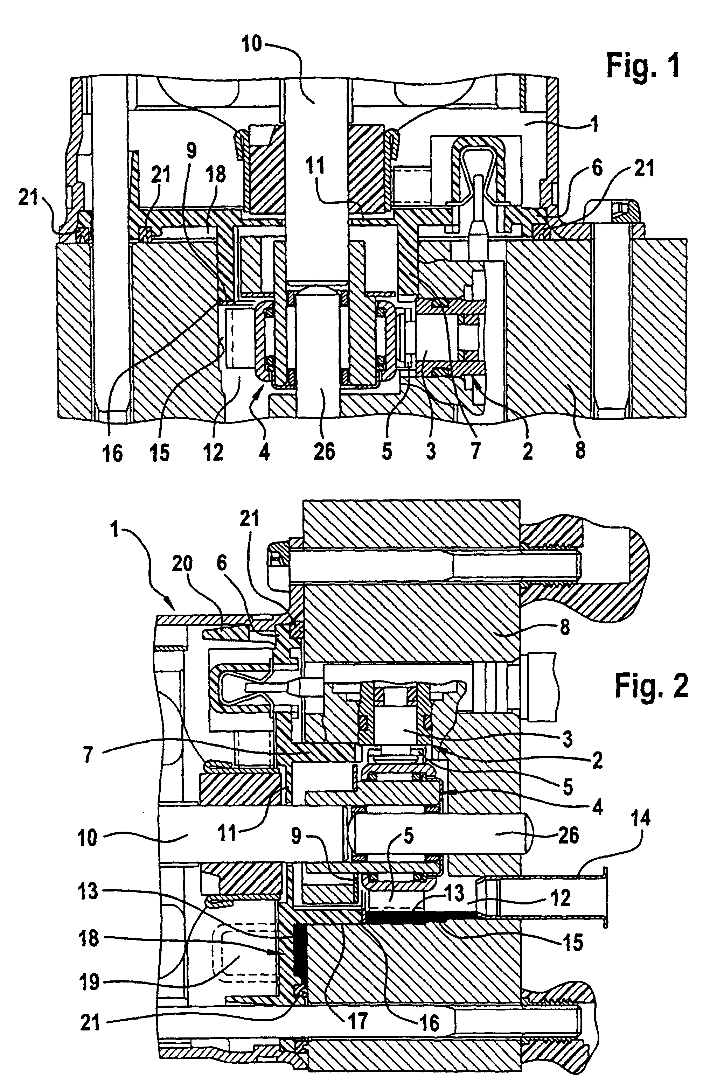

Neben der Funktion als Anschlag für den Kuppelring weist der bis in den Bewegungsbereich des Kuppelringes ragende Vorsprung der Halteplatte noch einen weiteren Vorteil auf. Im Kurbelraum, d.h. dem Raum, in dem der Exzenter angeordnet ist, sammelt sich während des Betriebes des Motor-Pumpen-Aggregates stets Leckageflüssigkeit der Pumpe. Wenn im Gehäuse der Pumpe ein Auslaßkanal für Leckageflüssigkeit vorgesehen ist, an dessen dem Exzenter bzw, dem Kurbelraum abgewandten Ende insbesondere noch ein Auslaßmittel angeordnet ist, so kann diese Flüssigkeit aus dem Kurbelraum nach außen ablaufen, beispielsweise auch in ein Reglergehäuse, in dem auch eine elektronische Regelung für das Motor-Pumpen-Aggregat flüssigkeitsdicht, d.h. auf jeden Fall von der ablaufenden Leckageflüssigkeit getrennt, untergebracht sein kann. Dieser Ablauf genügt den Anforderungen, wenn das erfindungsgemäße Motor-Pumpen-Aggregat in der in Fig. 1 gezeigten Weise beispielsweise in ein Kraftfahrzeug eingebaut ist.

Wenn ein derartiger senkrechter Einbau des Aggregates jedoch nicht möglich ist, so wird auch der Ablauf der Leckageflüssigkeit erschwert. Dieses Problem existiert insbesondere bei der in Fig. 2 gezeigten Einbaulage des Aggregates, die im Vergleich zu Fig. 1 um 90° gedreht ist. Zum Sammeln der Leckageflüssigkeit ist dann mit besonderem Vorteil im Gehäuse am Auslaßkanal eine Vertiefung angeordnet.

Wenn der Vorsprung an seinem der Vertiefung zugewandten Ende am äußeren Umfang eine Fase aufweist, so kann die Leckageflüssigkeit leicht in den Spalt zwischen Vorsprung bzw. Halteplatte und Pumpengehäuse eindringen. Vorzugsweise ist nämlich zwischen dem Vorsprung bzw. der Halteplatte und dem Gehäuse ein weiterer Kanal für Leckageflüssigkeit vorgesehen. Dadurch, daß der Vorsprung erfindungsgemäß bis in den Bewegungsbereich des Kuppelringes ragt, beginnt dieser weitere Kanal schon an einer relativ weit vom Motor entfernten Stelle, so daß der Motorinnenraum auch besser vor dem Eindringen von Leckageflüssigkeit und anderen Fremdpartikeln geschützt ist, die sich in dieser Flüssigkeit-befinden.

Wenn dieser weitere Kanal nicht aus dem Pumpengehäuse herausführt, so kann zum Sammeln der Flüssigkeit mit besonderem Vorteil zwischen dem Pumpengehäuse und der Halteplatte ein Reservoir für die Leckageflüssigkeit vorgesehen sein. Alternativ dazu ist es auch möglich, ein Reservoir für Leckageflüssigkeit im Motorraum anzuordnen.

Die vorliegende Erfindung sowie weitere Vorteile und Ausgestaltungen derselben wird anhand der folgenden Ausführungsbeispiele in Zusammenhang mit den zugehörigen Zeichnungen näher erläutert. Es zeigen:
- Fig. 1: ein erfindungsgemäßes Motor-Pumpen-Aggregat im Längsschnitt,
- Fig. 2: eine im Vergleich zu Fig. 1 um 90° gedrehte Einbaulage des erfindungsgemäßen Aggregates, ebenfalls im Längsschnitt,
- Fig. 3: eine perspektivische Darstellung einer Halteplatte des erfindungsgemäßen Motor-Pumpen-Aggregates, und
- Fig. 4: eine Einzelheit einer alternativen Ausführungsform der vorliegenden Erfindung im Längsschnitt.

In Fig. 1 und 2 sind ein Motor mit 1 und eine Kolbenpumpe mit 2 bezeichnet. Im Gehäuse des insbesondere als Elektromotor ausgebildeten Motors 1 ist eine Antriebswelle 10 angeordnet, die bis in ein Gehäuse 8 der Pumpe 2 hineinragt. Ferner ist zwischen dem Motor 1 und dem Pumpengehäuse 8 eine Halteplatte 6 vorgesehen, beispielsweise für nicht dargestellte Kontaktbürsten des Motors 1. Im Gehäuse 8 der Pumpe 2 ist, hier nur beispielhaft genannt und für die Erfindung nicht einschränkend, eine Stützachse 26 befestigt, auf der ein Exzenter 4 angeordnet ist. Durch den mit der Welle 10 mitdrehenden Exzenter 4 werden Kolben 3 der Pumpe 2 radial zur Antriebswelle bzw. Welle 10 hin und her bewegt, um so den, beispielsweise für den Betrieb eines elektronisch geregelten Bremssystems für Kraftfahrzeuge erforderlichen, Druck aufzubauen. Die Kolben 3 sind durch einen Kuppelring 5 miteinander verbunden, so daß ein Kolben 3 aufgrund des Exzenters 4 eine Druckhubbewegung ausführt, während der andere Kolben (nicht dargestellt) durch den Kuppelring 5 zurückgezogen wird und eine Saughubbewegung ausführt. Der Kuppelring 5 rotiert also nicht mit dem Exzenter 4, sondern oszilliert in der Bewegungsebene der Kolben 3. Dabei ist es möglich, daß sich der Kuppelring 5 um die Befestigungspunkte an den Kolben 3 verdreht (nicht gezeigt), insbesondere beim Anlauf des Motors 1 bzw. der Pumpe 2.

Erfindungsgemäß ist deshalb an der Halteplatte 6 des Motors 1 ein Vorsprung 7 vorgesehen, der sich bis in den Bewegungsbereich des Kuppelringes 5 erstreckt. Hierdurch wird neben der Zentrierung der Halteplatte 6 im Pumpengehäuse 8 ein feststehender Anschlag für den Kuppelring 5 geschaffen und so erfindungsgemäß und mit besonderem Vorteil die im Betrieb auftretende Reibung sowie Laufgeräusche der Pumpe 2 reduziert.

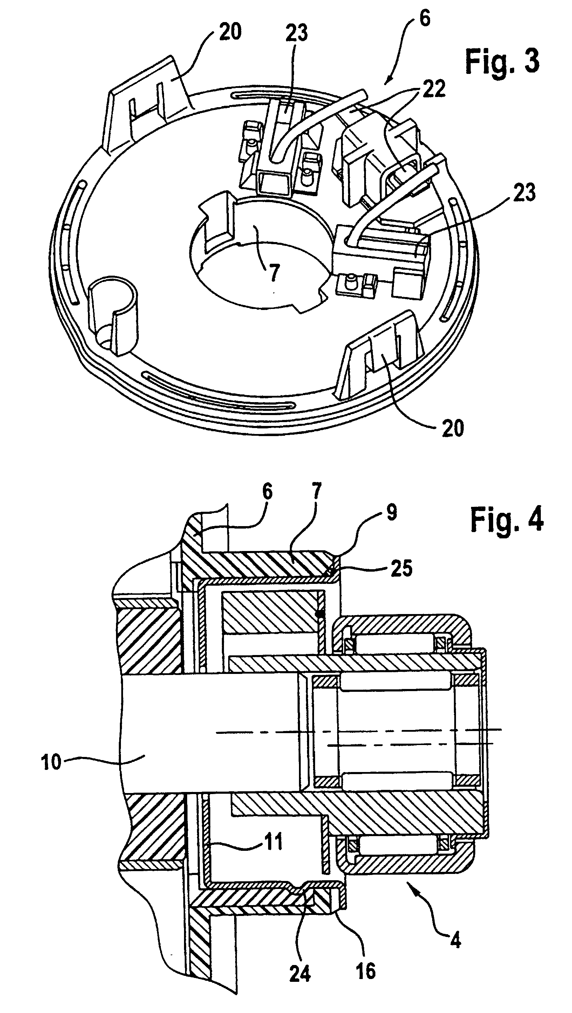

Das Ende des Vorsprunges 7 selbst kann dabei als Anschlag für den Kuppelring 5 dienen, wenn das Material eine entsprechende Abriebfestigkeit aufweist. Der Vorsprung 7 ist gemeinsam mit der Halteplatte 6 insbesondere aus Kunststoff hergestellt. Alternativ dazu kann am Vorsprung 7 jedoch auch ein separater Anschlag bzw. Anlauf 9 für den Kuppelring 5 vorgesehen sein. Dieser besteht dann aus einem geeigneten Werkstoff, beispielsweise aus Blech. In Zusammenhang mit der Beschreibung zu Fig. 4 wird ein derartiger Anschlag 9 näher erläutert.

Der Vorsprung 7 ist vorzugsweise kreisringförmig ausgebildet und um die in das Pumpengehäuse 8 hineinragende Welle 10 des Motors 1 herum angeordnet. Alternativ dazu kann der Vorsprung 7 auch einzelne Abschnitte aufweisen (nicht gezeigt), die beispielsweise als Anschlag dienen und bis in den Bewegungsbereich des Kuppelringes 5 ragen.

Ein weiterer Punkt der vorliegenden Erfindung ist die wirksame Trennung von Pumpe 2 und Kurbelraum, d.h. einerseits dem Raum, in dem der Exzenter 4 angeordnet ist, und andererseits dem Motor 1, wobei das Eindringen von flüssigen und/oder festen Medien in den Innenraum des Motors 1, in dem elektronische Bauteile angeordnet sind, unbedingt zu vermeiden ist. Mit besonderem Vorteil ist deshalb zwischen dem Vorsprung 7 und der Welle 10 eine Schottwand 11 vorgesehen, die das Eindringen von Fremdmedien in den Motorinnenraum verhindert bzw. erschwert. Die Schottwand 11 kann, wie in Fig. 1 und 2 gezeigt, beispielsweise einstückig mit der Halteplatte 6 ausgebildet sein.

Neben der Funktion als Anschlag für den Kuppelring 5 weist der erfindungsgemäß bis in den Bewegungsbereich des Kuppelringes 5 ragende Vorsprung 7 der Halteplatte 6 noch einen weiteren wesentlichen Vorteil auf. Im Kurbelraum sammelt sich nämlich während des Betriebes des Motor-Pumpen-Aggregates stets Leckageflüssigkeit 13 der Pumpe 2. Wenn im Gehäuse 8 der Pumpe 2 ein Auslaßkanal 12 für die Leckageflüssigkeit 13 vorgesehen ist, an dessen dem Exzenter 4 bzw. dem Kurbelraum abgewandten Ende insbesondere noch ein Auslaßmittel 14 angeordnet ist, so kann diese Flüssigkeit 13 aus dem Kurbelraum nach außen ablaufen, z.B. in ein nicht dargestelltes Reglergehäuse, in dem beispielsweise eine elektronische Regelung für das Motor-Pumpen-Aggregat untergebracht ist.

Dieser Ablauf bzw. Auslaßkanal 12 genügt den Anforderungen, wenn das Motor-Pumpen-Aggregat in der in Fig. 1 gezeigten Weise, beispielsweise in ein Kraftfahrzeug, eingebaut ist. Wenn ein derartiger senkrechter Einbau des Aggregates jedoch nicht möglich ist, so wird auch der Ablauf der Leckageflüssigkeit 13 aus dem Kurbelraum erschwert. Dieses Problem existiert insbesondere bei der in Fig. 2 gezeigten Einbaulage des Aggregates, die im Vergleich zu Fig. 1 um 90° gedreht ist. Dann ist vorzugsweise und mit besonderem Vorteil im Gehäuse 8 am Auslaßkanal 12 eine Vertiefung 15 angeordnet, in der sich Leckageflüsigkeit 13 sammelt.

Wenn der Vorsprung 7 an seinem der Vertiefung 15 zugewandten Ende am äußeren Umfang eine Fase 16 aufweist, so kann die Leckageflüssigkeit 13 leicht in den Spalt zwischen Vorsprung 7 bzw. Halteplatte 6 und Pumpengehäuse 8 eindringen. Vorzugsweise ist nämlich dieser Spalt als weiterer Kanal 17 für Leckageflüssigkeit 13 vorgesehen. Dadurch, daß der Vorsprung 7 erfindungsgemäß bis in den Bewegungsbereich des Kuppelringes 5 ragt, beginnt dieser weitere Kanal 17 schon an einer relativ weit vom Motor 1 entfernten Stelle, so daß der Motorinnenraum besser vor dem Eindringen von Leckageflüssigkeit 13 und anderen Fremdpartikeln geschützt ist, die sich in dieser Flüssigkeit 13 befinden.

Wenn dieser weitere Kanal 17 nicht aus dem Pumpengehäuse 8 herausführt, so kann zum Sammeln der Flüssigkeit 13 mit besonderem Vorteil zwischen dem Pumpengehäuse 8 und der Halteplatte 6 ein Reservoir 18 für die Leckageflüssigkeit 13 vorgesehen sein. Alternativ dazu ist es auch möglich, wie in Fig. 2 gestrichelt angedeutet, ein Reservoir 19 für Leckageflüssigkeit 13 im Innenraum des Motors 1 anzuordnen.

Fig. 3 zeigt die Halteplatte 6 in perspektivischer Darstellung. Neben dem bereits oben erwähnten erfindungsgemäßen Vorsprung 7 weist die Halteplatte 6 als Schnittstelle zwischen Motor 1 und Pumpe 2 vorzugsweise eine Reihe von weiteren Vorteilen auf. So ist eine Kontaktklemme 22 zum Ausgleich von Wärmedehnungen im elektrischen Verbindungssystem und Toleranzausgleich in einem nicht bezeichneten Gehäuse schwimmend gelagert direkt an der Halteplatte 6 integriert angeordnet. Dadurch wird an der Platte 6 eine einfache elektrische Kontaktierung für ein einfaches elektrisches Verbindungselement, z.B. ein Kabelende, geschaffen, so daß eine elektrische Entstörung auch direkt an der Halteplatte 6 vorgenommen werden kann. Ebenso sind Kontaktbürstengehäuse 23 direkt an der Platte 6 angebracht. Zur Verbindung mit dem Gehäuse des Motors 1 können an der Platte 6 des weiteren ein oder mehrere Schnapphaken 20 integriert vorgesehen sein. Weiterhin können beispielsweise eine oder mehrere angespritzte Dichtungen 21 (siehe Fig. 1 und 2), z.B. aus Silikon, an der Platte 6 integriert sein, die das Eindringen von Fremdmedien von außen in das Aggregat wirksam verhindern. Schließlich kann die Platte 6 auch eine Halte- bzw. Sicherungsfunktion für einen nicht bezeichneten Rotor bzw, einen ebenfalls nicht bezeichneten, schwebenden Anker des Motors 1 bei dessen Transport erfüllen.

Gemäß dem in Fig. 4 dargestellten Ausführungsbeispiel ist die Schottwand 11 als eigenständiges Bauteil einstückig mit einem separaten Anschlag 9 für den nicht dargestellten Kuppelring ausgebildet ist. Die Verbindung 24 dieses vorzugsweise als rundem Blechtopf ausgebildeten Bauteils 9, 11 mit dem erfindungsgemäßen Vorsprung 7 kann form- und/oder kraftschlüssig erfolgen, wobei zwischen dem Vorsprung 7 der Platte 6 und dem Bauteil 9, 11 noch eine Dichtung 25 vorgesehen sein kann.

## Patentansprüche

1. Motor-Pumpen-Aggregat mit einem Motor (1) und einer Kolbenpumpe (2), insbesondere für elektronisch geregelte Bremssysteme von Kraftfahrzeugen, wobei Kolben (3) der Pumpe (2) über einen mit einer Welle (10) des Motors (1) verbundenen Exzenter (4) antreibbar und mittels eines Kuppelringes (5) verbunden sind, und wobei der Motor (1) eine Halteplatte (6) aufweist, **dadurch gekennzeichnet, daß** an der Halteplatte (6) ein Vorsprung (7) vorgesehen ist, der sich bis in den Bewegungsbereich des Kuppelringes (5) erstreckt.

2. Motor-Pumpen-Aggregat nach Anspruch 1, **dadurch gekennzeichnet, daß** am Vorsprung (7) ein separater Anschlag (9) für den Kuppelring (5) vorgesehen ist.

3. Motor-Pumpen-Aggregat nach Anspruch 1 oder 2, **dadurch gekennzeichnet, daß** der Vorsprung (7) kreisringförmig ausgebildet und um die Welle (10) herum angeordnet ist.

4. Motor-Pumpen-Aggregat nach einem der Ansprüche 1 bis 3, **dadurch gekennzeichnet, daß** zwischen dem Vorsprung (7) und der Welle (10) eine Schottwand (11) vorgesehen ist.

5. Motor-Pumpen-Aggregat nach Anspruch 4, **dadurch gekennzeichnet, daß** die Schottwand (11) einstückig mit der Halteplatte (6) ausgebildet ist.

6. Motor-Pumpen-Aggregat nach Anspruch 4, **dadurch gekennzeichnet, daß** die Schottwand (11) einstückig mit dem separaten Anschlag (9) ausgebildet ist.

7. Motor-Pumpen-Aggregat nach einem der vorhergehenden Ansprüche, **dadurch gekennzeichnet, daß** ein Gehäuse (8) der Pumpe (2) einen Auslaßkanal (12) für Leckageflüssigkeit (13) aufweist, an dessen dem Exzenter (4) abgewandten Ende ein Auslaßmittel (14) angeordnet ist.

8. Motor-Pumpen-Aggregat nach Anspruch 7, **dadurch gekennzeichnet, daß** das Gehäuse (8) am Auslaßkanal (12) eine Vertiefung (15) aufweist.

9. Motor-Pumpen-Aggregat nach Anspruch 8, **dadurch gekennzeichnet, daß** der Vorsprung (7) an seinem der Vertiefung (15) zugewandten Ende am äußeren Umfang eine Fase (16) aufweist.

10. Motor-Pumpen-Aggregat nach einem der vorhergehenden Ansprüche, **dadurch gekennzeichnet, daß** zwischen dem Vorsprung (7) bzw. der Halteplatte (6) und dem Gehäuse (8) ein weiterer Kanal (17) für Leckageflüssigkeit (13) vorgesehen ist.

11. Motor-Pumpen-Aggregat nach Anspruch 10, **dadurch gekennzeichnet, daß** zwischen dem Gehäuse (8) und der Halteplatte (6) ein Reservoir (18) für Leckageflüssigkeit (13) vorgesehen ist.

12. Motor-Pumpen-Aggregat nach Anspruch 10, **dadurch gekennzeichnet, daß** im Motorraum ein Reservoir (19) für Leckageflüssigkeit (13) vorgesehen ist.

## Claims

1. Motor-pump aggregate including a motor (1) and a piston pump (2), more particularly for electronically controlled brake systems of motor vehicles, wherein pistons (3) of the pump (2) are drivable by way of an eccentric (4) that is connected to a shaft (10) of the motor (1) and are connected by means of a coupling ring (5), and wherein the motor (1) has a holding plate (6),
**characterized in that** a projection (7) is provided at the holding plate (6) and extends up to the range of motion of the coupling ring (5).

2. Motor-pump aggregate as claimed in claim 1,
**characterized in that** a separate stop (9) for the coupling ring (5) is provided at the projection (7).

3. Motor-pump aggregate as claimed in claim 1 or 2,
**characterized in that** the projection (7) has a circular design and is arranged around the shaft (10).

4. Motor-pump aggregate as claimed in any one of claims 1 to 3,
**characterized in that** a fire wall (11) is arranged between the projection (7) and the shaft (10).

5. Motor-pump aggregate as claimed in claim 4,
**characterized in that** the fire wall (11) is designed integrally with the holding plate (6).

6. Motor-pump aggregate as claimed in claim 4,
**characterized in that** the fire wall (11) is designed integrally with the separate stop (9).

7. Motor-pump aggregate as claimed in any one of the preceding claims,
**characterized in that** a housing (8) of the pump (2) includes an outlet channel (12) for leakage fluid (13), and an outlet means (14) is arranged at the end of said channel remote from the eccentric (4).

8. Motor-pump aggregate as claimed in claim 7,
**characterized in that** the housing (8) includes an indentation (15) at the outlet channel (12).

9. Motor-pump aggregate as claimed in claim 8,
**characterized in that** the projection (7) has a chamfer (16) at the outside periphery of its end facing the indentation (15).

10. Motor-pump aggregate as claimed in any one of the preceding claims,
**characterized in that** another channel (17) for leakage fluid (13) is provided between the projection (7) or the holding plate (6) and the housing (8).

11. Motor-pump aggregate as claimed in claim 10,
**characterized in that** a reservoir (18) for leakage fluid (13) is provided between the housing (8) and the holding plate (6).

12. Motor-pump aggregate as claimed in claim 10,
**characterized in that** a reservoir (19) for leakage fluid (13) is provided in the motor compartment.

## Revendications

1. Groupe moteur-pompe comprenant un moteur (1) et une pompe à pistons (2), notamment pour des systèmes de freinage à régulation électronique de véhicule automobile, dans lequel des pistons (3) de la pompe (2) peuvent être entraînés par un excentrique (4) relié à un arbre (10) du moteur (1) et sont reliés les uns aux autres par un anneau d'accouplage (5), et dans lequel le moteur (1) comporte une plaque de maintien (6), **caractérisé en ce qu'**une saillie (7) est prévue sur la plaque de maintien (6), saillie qui s'étend jusque dans la zone de déplacement de l'anneau d'accouplage (5).

2. Groupe moteur-pompe selon la revendication 1, **caractérisé en ce qu'**une butée séparée (9) pour l'anneau d'accouplage (5) est prévue sur la saillie (7).

3. Groupe moteur-pompe selon la revendication 1 ou 2, **caractérisé en ce que** la saillie (7) est formée de manière annulaire et est disposée autour de l'arbre (10).

4. Groupe moteur-pompe selon l'une quelconque des revendications 1 à 3, **caractérisé en ce qu'**entre la saillie (7) et l'arbre (10) est prévue une paroi de cloison (11).

5. Groupe moteur-pompe selon la revendication 4, **caractérisé en ce que** la paroi de cloison (11) est formée d'une seule pièce avec la plaque de maintien (6).

6. Groupe moteur-pompe selon la revendication 4, **caractérisé en ce que** la paroi de cloison (11) est formée d'une seule pièce avec la butée séparée (9).

7. Groupe moteur-pompe selon l'une quelconque des revendications précédentes, **caractérisé en ce qu'**un boîtier (8) de la pompe (2) comporte un conduit de sortie (12) pour du liquide de fuite (13), un moyen de sortie (14) étant prévu sur son extrémité opposée à l'excentrique (4).

8. Groupe moteur-pompe selon la revendication 7, **caractérisé en ce que** le boîtier (8) comporte un creux (15) au niveau du conduit de sortie (12).

9. Groupe moteur-pompe selon la revendication 8, **caractérisé en ce que** la saillie (7) comporte un chanfrein sur la circonférence extérieure de son extrémité tournée vers le creux (15).

10. Groupe moteur-pompe selon l'une quelconque des revendications précédentes, **caractérisé en ce qu'**un conduit supplémentaire (17) pour du liquide de fuite (13) est prévu entre la saillie (7) ou la plaque de maintien (6) et le boîtier (8).

11. Groupe moteur-pompe selon la revendication 10, **caractérisé en ce qu'**un réservoir (18) pour du liquide de fuite (13) est prévu entre le boîtier (8) et la plaque de maintien (6).

12. Groupe moteur-pompe selon la revendication 10, **caractérisé en ce qu'**un réservoir (19) pour du liquide de fuite (13) est prévu dans l'espace moteur.
